# EUROPÄISCHE PATENTANMELDUNG

(11) **EP 2 208 661 A1**
(43) Veröffentlichungstag der Anmeldung: **21.07.2010**
(21) Anmeldenummer: 09000578.6
(22) Anmeldetag: 16.01.2009
(51) Int. Cl.: B62D 59/04

(54) **Rangierantrieb für Fahrzeuganhänger**

(71) Anmelder: Truma Gerätetechnik GmbH & Co. KG, 85640 Putzbrunn (DE)
(72) Erfinder: Wickelmaier, Peter, 81671 München (DE); Achatz, Dieter, 81673 München (DE); Kessler, Kurt, 81673 München (DE)
(74) Vertreter: Hoffmann, Jörg Peter

(57) **Zusammenfassung**

Ein Rangierantrieb für einen Anhänger weist einen relativ zu dem Anhänger bewegbaren Träger (3) auf. Der Träger (3) lagert einen Antriebsmotor (5) sowie eine von dem Antriebsmotor (5) drehend antreibbare Antriebsrolle (9). In dem Kraftfluss zwischen dem Antriebsmotor (5) und der Antriebsrolle (9) ist eine Getriebe-einrichtung (8) vorgesehen. Der Träger (3) ist zwischen einer Ruheposition, in der die Antriebsrolle (9) von einem Rad (40) des Anhängers getrennt ist, und einer Antriebsposition, in der die Antriebsrolle (9) gegen das Rad (40) des Anhängers gedrückt wird, bewegbar. Sowohl die Getriebeeinrichtung (8) als auch der Antriebsmotor (5) sind wenigstens teilweise innerhalb der Antriebsrolle (9) angeordnet.

## Beschreibung

Die Erfindung betrifft gemäß dem Oberbegriff von Patentanspruch 1 einen Rangierantrieb für einen Anhänger.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er meist von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Rangier- bzw. Hilfsantriebe entwickelt, die es ermöglichen, auch ohne Zugmaschine einen Anhänger mit Motorunterstützung zu verschieben bzw. zu drehen.

So wird in der EP 1 714 858 A1 ein Hilfsantrieb für einen Fahrzeuganhänger mit einseitig gelagerter Antriebsrolle beschrieben. Der Hilfsantrieb weist einen relativ zu einem Fahrgestell des Anhängers bewegbaren Träger auf, der einen Antriebsmotor und eine Antriebsrolle trägt. Ein Bewegungsmechanismus dient zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Der Antriebsmotor treibt die Antriebsrolle über ein Winkelgetriebe an.

Derartige Rangierantriebe erfordern einen robusten Aufbau und bauen daher meist groß, wie zum Beispiel aus der EP 0 827 898 A1 bekannt. Da der Rangierantrieb jedoch an der Unterseite des Anhängers befestigt werden muss, ist der Bauraum meist sehr begrenzt. Der Rangierantrieb gemäß EP 1 714 858 A1 ist demgegenüber bereits erheblich kompakter ausgeführt.

Aus der US 3,826,324 ist ein Rangierantrieb bekannt, bei dem zwischen dem Antriebsmotor und der Antriebsrolle ein Planetengetriebe vorgesehen ist. Das Planetengetriebe ist innerhalb einer in der Antriebsrolle vorgesehenen Ausnehmung angeordnet.

Der Erfindung liegt die Aufgabe zugrunde, einen Rangierantrieb für einen Anhänger anzugeben, der kompakt und Bauraum sparend aufgebaut ist.

Die Aufgabe wird erfindungsgemäß durch einen Rangierantrieb mit den Merkmalen von Anspruch 1 gelöst. Vorteilhafte Ausgestaltungen der Erfindung sind in den abhängigen Ansprüchen angegeben.

Ein Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor, einer von dem Antriebsmotor drehend antreibbaren Antriebsrolle, einer im Kraftfluss zwischen dem Antriebsmotor und der Antriebsrolle vorgesehenen Getriebeeinrichtung, und mit einer Bewegungseinrichtung zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird, ist **dadurch gekennzeichnet, dass** die Antriebsrolle wenigstens teilweise hohl ausgebildet ist, derart, dass innerhalb des von der Antriebsrolle umschriebenen Raums eine Ausnehmung ausgebildet ist, und dass sowohl die Getriebeeinrichtung als auch der Antriebsmotor wenigstens teilweise innerhalb der Ausnehmung angeordnet sind.

Dadurch, dass Komponenten sowohl von der Getriebeeinrichtung als auch von dem Antriebsmotor wenigstens teilweise innerhalb der Ausnehmung, das heißt innerhalb der Antriebsrolle angeordnet sind, kann erheblicher Bauraum in der Umgebung des Rangierantriebs gespart werden.

Insbesondere kann die Getriebeeinrichtung und/oder der Antriebsmotor im Wesentlichen oder gar vollständig innerhalb der Ausnehmung angeordnet sein. So ist es zum Beispiel möglich, dass die Getriebeeinrichtung vollständig und der Antriebsmotor überwiegend, das heißt mit mehr als 50 % seines Volumens im Inneren der Antriebsrolle angeordnet sein können. Wenn technisch möglich, können sogar beide Komponenten, also die Getriebeeinrichtung und der Antriebsmotor vollständig in der Antriebsrolle untergebracht werden.

Die Antriebsrolle kann an einer ihrer beiden Stirnseiten geschlossen sein. Bei einer einseitig gelagerten Antriebsrolle, wie zum Beispiel aus der EP 1 714 858 A1 bekannt, kann es sich dabei insbesondere um die freiliegende Stirnseite handeln, die zum Beispiel durch einen Deckel oder auch durch eine einstückig mit der Antriebsrolle ausgebildete Abdeckplatte geschlossen ist. Diejenige Seite der Antriebsrolle, die zu dem Träger hin gerichtet ist, kann offen bleiben oder ebenfalls durch eine geeignete Abdeckung verschlossen werden.

Die Getriebeeinrichtung und die Antriebsrolle können von dem Träger gelagert werden. Somit lagert der Träger nicht nur den Antriebsmotor, sondern auch die weiteren wesentlichen Komponenten, die für die Bewegungserzeugung und -übertragung auf das Rad des Fahrzeuganhängers erforderlich sind.

Ein die Getriebeeinrichtung und die Antriebsrolle lagernder Teil des Trägers kann eine im Wesentlichen zylindrische bzw. hohlzylindrische Grundform aufweisen. Die Antriebsrolle kann diesen Teil des Trägers radial umgeben. Zudem kann die Antriebsrolle mit Hilfe von geeigneten Lagern (Wälzlager, Gleitlager) auf dem zylindrischen Teil des Trägers gelagert sein.

Der Antriebsmotor kann ein bürstenloser Elektromotor mit Dreiphasen-Ansteuerung (Drehstrom) sein. Da der Motor aus Sicherheitsgründen im Niedervoltbereich (zum Beispiel 12 Volt) betrieben werden sollte, ist es zweckmäßig, wenn der Motor kurzzeitig hohe Ströme (zum Beispiel bis 60 Ampere) aufnehmen kann.

Die Getriebeeinrichtung kann wenigstens eine der folgenden Komponenten aufweisen: Planetengetriebe, Wolfromgetriebe, Gleitkeilgetriebe (Harmonic-Drive-Getriebe), Cyclogetriebe. Ebenso ist es möglich, dass die Getriebeeinrichtung zwei Getriebestufen, zum Beispiel aus den vorstehend genannten Getriebetypen aufweist. Die genannten Getriebe ermöglichen es in besonders geeigneter Weise, hohe Übersetzungsverhältnisse zu erzielen. Dadurch ist es möglich, dass der Antriebsmotor nur ein relativ niedriges Drehmoment, jedoch bei einer hohen Drehzahl zur Verfügung stellen muss, was den Wirkungsgrad verbessert und es ermöglicht, den Motor klein zu bauen. Durch die starke Untersetzung wird die hohe Motordrehzahl auf ein geeignetes Maß reduziert. Im Gegenzug erhöht sich das Antriebsdrehmoment derart, dass die Antriebsrolle auch einen schweren Anhänger bewegen kann.

Bei einer Ausführungsform weist die Getriebeeinrichtung ein Planetengetriebe auf. Auf einer Antriebswelle des Antriebsmotors ist ein Antriebsritzel angeordnet, das als Sonnenrad des Planetengetriebes dient. Die Antriebsrolle ist mit einem Planetenträger des Planetengetriebes starr verbunden, während ein Hohlrad des Planetengetriebes an dem Träger befestigt ist. Durch diese Anordnung kann im Inneren der Antriebsrolle ohne weiteres ein Planetengetriebe vorgesehen werden, das durch die Antriebswelle des Antriebsmotors angetrieben wird. Da Planetengetriebe häufig nur eine geringe axiale Baugröße aufweisen, ist es - bei entsprechender Axialerstreckung der Antriebsrolle - ohne weiteres möglich, auch den Antriebsmotor im Inneren der Antriebsrolle vorzusehen.

Bei einer anderen Ausführungsform weist die Getriebeeinrichtung zwei in Serie angeordnete Planetengetriebe auf. Auf der Antriebswelle des Antriebsmotors ist ein Antriebsritzel angeordnet, das als Sonnenrad des ersten Planetengetriebes dient. Das Sonnenrad des zweiten Planetengetriebes hingegen ist an dem Planetenträger des ersten Planetengetriebes ausgebildet. Die Antriebsrolle ist mit einem Planetenträger des zweiten Planetengetriebes starr verbunden, wobei die Hohlräder von beiden Planetengetrieben an dem Träger befestigt sind bzw. auf der Innenseite des Trägers ausgebildet sind. Da bei dieser Variante zwei Planetengetriebe in Serie hintereinander geschaltet sind, kann ein besonders großes Untersetzungsverhältnis erreicht werden.

Die Bewegungseinrichtung, die zum Bewegen des Trägers zwischen der Ruheposition und der Antriebsposition dient, kann ebenfalls durch den Antriebsmotor angetrieben werden. Beim Stand der Technik war es bisher entweder erforderlich, den Träger manuell zwischen den beiden Betriebspositionen hin- und herzubewegen, oder es war ein zusätzlicher Bewegungsmotor (zum Beispiel ein Spindelantrieb) erforderlich, um die Bewegung des Trägers zu bewirken.

Bei der hier beschriebenen Variante hingegen dient der Antriebsmotor sowohl zum drehenden Antreiben der Antriebswelle als auch - bei Bedarf - zum Antreiben der Bewegungseinrichtung, um die Bewegung des Trägers durchzuführen.

Auch die Bewegungseinrichtung kann ein Untersetzungsgetriebe aufweisen, um einerseits eine ausreichende Kraftwirkung des Antriebsmotors bei der Bewegung des Trägers zu erreichen und andererseits trotz hoher Drehzahl des Motors nur eine langsame Bewegung zu bewirken.

Die Bewegungseinrichtung kann eine Kraftwirkungseinrichtung aufweisen, zum Erzeugen einer Kraftwirkung zwischen dem Träger und der an dem Anhänger zu befestigenden Befestigungseinrichtung, derart, dass der Träger relativ zu der Befestigungseinrichtung bewegbar ist. Bei der Kraftwirkungseinrichtung kann es sich zum Beispiel um einen Spindel- oder Zahnstangenmechanismus handeln. Ebenso ist ein Hebelmechanismus möglich, bei dem durch Bewegen der Hebel mit Hilfe der Bewegungseinrichtung eine Bewegung (zum Beispiel Verschiebung oder Verschwenkung) des Trägers bewirkt wird.

Es kann eine Umschalteinrichtung vorgesehen sein, zum Umschalten zwischen einem ersten Betriebszustand, in dem der Antriebsmotor ausschließlich zum Antreiben der Antriebsrolle nutzbar ist, und einem zweiten Betriebszustand, in dem der Antriebsmotor ausschließlich zum Antreiben der Bewegungseinrichtung nutzbar ist. Da - wie oben beschrieben - der Antriebsmotor sowohl zum Antreiben der Antriebsrolle als auch zum Antreiben der Bewegungseinrichtung und damit Bewegen des Trägers genutzt werden kann, ist es zweckmäßig, die beiden Antriebszustände funktional voneinander zu trennen. Anderenfalls bestünde das Risiko, dass zum Beispiel die Antriebsrolle drehend gegen die Außenseite des Anhängerrads bewegt würde, was zu unkontrollierten Bewegungen des Anhängers selbst führen würde.

Die Umschalteinrichtung kann eine Verschiebeeinrichtung aufweisen, wobei der Antriebsmotor durch die Verschiebeeinrichtung zwischen einer ersten Position für den ersten Betriebszustand und einer zweiten Position für den zweiten Betriebszustand axial verschiebbar ist. Der Antriebsmotor kann somit zwischen den beiden Positionen verschoben werden und je nach Position eine der beiden Komponenten, nämlich entweder die Antriebsrolle oder die Bewegungseinrichtung, antreiben. Das Verschieben des Antriebsmotors kann zum Beispiel elektromagnetisch mit Hilfe eines geeigneten Stellglieds bewirkt werden.

Diese und weitere Vorteile und Merkmale der Erfindung werden nachfolgend anhand von Beispielen unter Zuhilfenahme der beigleitenden Figuren näher erläutert. Es zeigen:
- **Fig. 1**: in schematischer Schnittdarstellung einen Rangierantrieb für einen Anhänger;
- **Fig. 2**: eine Variante des Rangierantriebs mit zweistufigem Planetengetriebe;
- **Fig. 3**: eine Variante des Rangierantriebs mit Wolfrom-Getriebe;
- **Fig. 4**: einen Anschwenkmechanismus des Rangierantriebs;
- **Fig. 5**: eine Variante eines Anschwenkmechanismus mit axial verschiebba- rem Antriebsmotor in einer ersten Position;
- **Fig. 6**: den Antriebsmotor von Fig. 5 in axial verschobener, zweiter Position;
- **Fig. 7**: einen Anschwenkmechanismus in abgeschwenkter Stellung (Ruhepo- sition) des Trägers; und
- **Fig. 8**: der Anschwenkmechanismus in angeschwenkter Stellung (Träger in Antriebsposition).

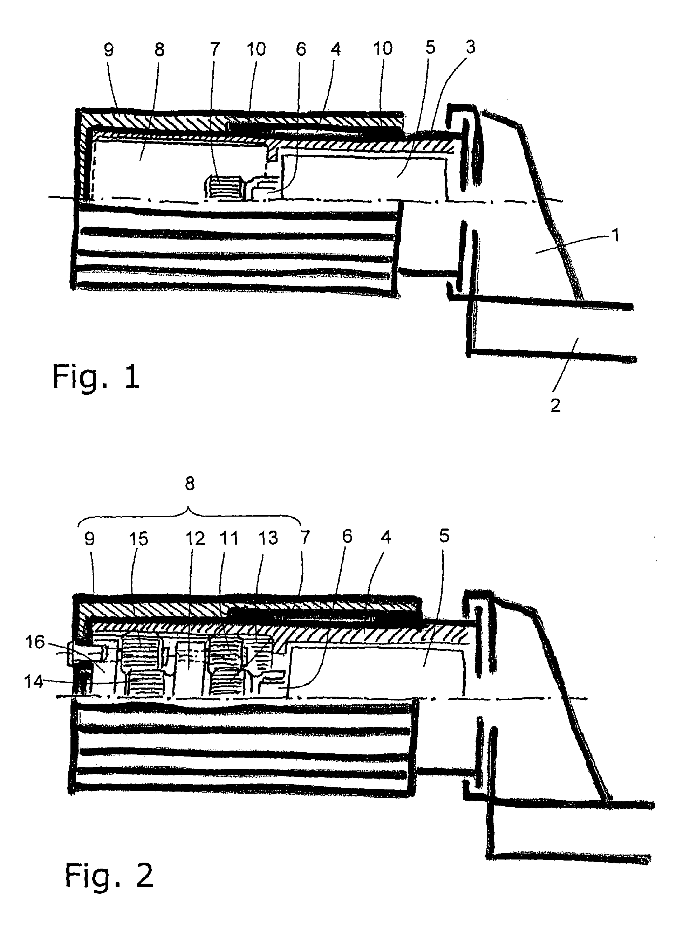

Fig. 1 zeigt in geschnittener Teildarstellung einen Rangierantrieb für einen Anhänger.

Eine als Befestigungseinrichtung 1 dienende Stahlkonstruktion ist in geeigneter Weise, zum Beispiel durch Verschrauben oder Verschweißen an einem Grundrahmen 2 eines Anhängers, zum Beispiel eines Wohnwagens befestigt. Die Befestigungseinrichtung 1 hält einen Träger 3 derart, dass der Träger 3 relativ zu der Befestigungseinrichtung 1 bewegbar ist. Bei der in Fig. 1 gezeigten Variante ist der Träger 3 längs zu der Befestigungseinrichtung 1, das heißt in die Zeichenebene hinein bzw. aus der Zeichenebene heraus bewegbar. Die Bewegung des Trägers 3 erfolgt mit Hilfe einer in der Figur nicht näher gezeigten Bewegungseinrichtung, die später noch erläutert wird.

Der Träger 3 weist ein hohlzylindrisches Tragrohr 4 auf, in dessen Innerem ein Antriebsmotor 5 angeordnet ist. Bei dem Antriebsmotor 5 kann es sich um einen bürstenlosen 12-Volt-Motor mit Dreiphasen-Ansteuerung (Drehstrom) handeln.

Auf einer Antriebswelle 6 des Antriebsmotors 5 ist ein Antriebsritzel 7 vorgesehen, das in eine Getriebeeinrichtung 8 hineinragt. Die Getriebeeinrichtung 8 ist in Fig. 1 nur schematisch als Blackbox dargestellt, wodurch zum Ausdruck gebracht wird, dass es für die Getriebeeinrichtung 8 vielfältige Lösungsmöglichkeiten gibt. Die Getriebeeinrichtung 8 dient dazu, die Antriebsbewegung des Antriebsritzels 7 auf eine einen erheblichen Teil des Tragrohrs 4 umgebende Antriebsrolle 9 zu übertragen.

Die Antriebsrolle 9 ist hülsenförmig ausgebildet und weist eine große zylindrische Ausnehmung auf, in der sich das Tragrohr 4 des Trägers 3 befindet. Die Antriebsrolle 9 ist in bekannter Weise mit einer rauhigkeitserhöhenden Außenseite ausgestattet, mit der sie gegen die Umfangsfläche eines Fahrzeugreifens des Anhängers gedrückt wird. Ein Beispiel für die Antriebsrolle 9 kann zum Beispiel der EP 1 714 858 A1 entnommen werden.

Die Antriebsrolle 9 ist mit Hilfe von Nadellagern 10 auf der Außenseite des Tragrohrs 4 gelagert.

Wie die Fig. 1 zeigt, ist die Getriebeeinrichtung 8 vollständig und der Antriebsmotor 5 überwiegend, also mit mehr als 50 % seines Volumens im Inneren des von der Antriebsrolle 9 umschriebenen Raums angeordnet. Während beim Stand der Technik der Antriebsmotor und die Getriebeeinrichtung vollständig außerhalb der Antriebsrolle vorgesehen waren, ermöglicht die in Fig. 1 gezeigte Variante einen besonders kompakten Aufbau, wie unmittelbar ersichtlich.

Fig. 2 zeigt eine Ausgestaltung der Ausführungsform von Fig. 1.

Dabei ist die Getriebeeinrichtung 8 in Form eines zweistufigen Planetengetriebes realisiert.

Das Antriebsritzel 7 dient als Sonnenrad einer ersten Stufe (erstes Planetengetriebe) und wird von Planetenrädern 11 umgeben, die von einem Planetenträger 12 gehalten werden. Die Planetenräder 11 laufen in einem innenverzahnten Hohlrad 13 um, welches auf der Innenseite des Tragrohrs 4 ausgebildet ist.

Der Planetenträger 12 trägt auf der den Planetenrädern 11 gegenüberliegenden Seite ein Ritzel 14, welches als Sonnenrad für die zweite Stufe (zweites Planetengetriebe) dient. Das Ritzel 14 wird nun seinerseits von Planetenrädern 15 umlaufen, die wie die Planetenräder 11 in dem Hohlrad 13 kämmen. Die Planetenräder 15 werden von einem Planetenträger 16 gehalten, der seinerseits mit der Stirnseite der Antriebsrolle 9 verschraubt ist.

Auf diese Weise wird das Antriebsmoment des Antriebsmotors 5 mit Hilfe der beiden Planetenstufen erhöht, während die Antriebsdrehzahl des Antriebsmotors 5 stark reduziert wird. Die mit dem Planetenträger 16 gekoppelte Antriebsrolle 9 dreht sich in entsprechender Weise.

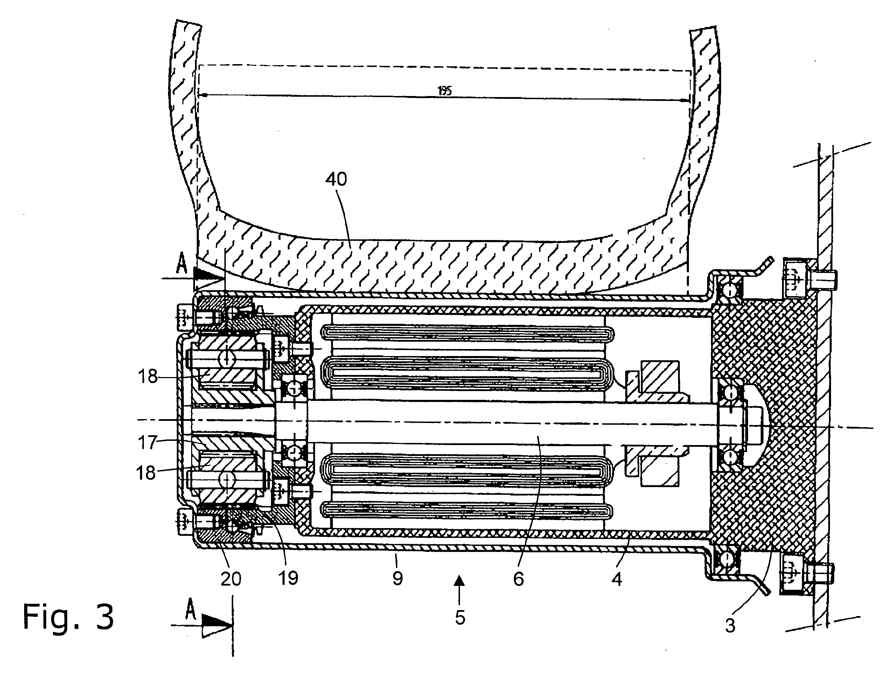

Fig. 3 zeigt eine andere Ausführungsform der Erfindung, bei der die Getriebeeinrichtung 8 mit Hilfe eines Wolfrom-Getriebes realisiert ist.

Gleiche oder ähnliche Bauelemente wie bei den Varianten der Fig. 1 und 2 werden mit gleichen Bezugszeichen gekennzeichnet.

Auch bei dieser Variante ist im Inneren des Tragrohrs 4 des Trägers 3 der Antriebsmotor 5 angeordnet. Die Antriebswelle 6 trägt auf ihrem Wellenende einen Planetenträger 17, der zwei oder mehr Planetenräder 18 drehbar lagert.

An dem Tragrohr 4 ist ein erstes Hohlrad 19 befestigt, in dem die Planetenräder 18 umlaufen.

Auf der Innenseite der Antriebsrolle 9 ist ein zweites Hohlrad 20 mit Hilfe von Schrauben befestigt. Wie die Figur zeigt, kämmen die Planetenräder 18 auch mit dem zweiten Hohlrad 20.

Entsprechend dem Prinzip eines Wolfrom-Getriebes weisen die beiden Hohlräder 19 und 20 unterschiedliche Zähnezahlen auf. Zum Beispiel kann die Zähnezahl des ersten Hohlrads 19 90 betragen, während an dem zweiten Hohlrad 20 88 Zähne vorgesehen sind. Die Zähnezahlen sollten geringfügig, also zum Beispiel um ein oder zwei Zähne voneinander abweichen. Durch die kämmende Bewegung der Planetenräder 18 wird bewirkt, dass sich das frei drehbare zweite Hohlrad 20 relativ zu dem an dem Träger 3 festgehaltenen ersten Hohlrad 19 verdrehen muss. Dementsprechend dreht sich auch die Antriebsrolle 9 relativ zu dem Träger 3, wodurch die gewünschte Drehbewegung der Abtriebsrolle 9 erreicht wird.

Das Wolfrom-Getriebe ermöglicht ein hohes Untersetzungsverhältnis von zum Beispiel 45. Umgekehrt weist das Wolfrom-Getriebe Selbsthemmungseigenschaften auf, sodass die Antriebsrolle 9 nicht durch Krafteinwirkung von außen, zum Beispiel durch den Fahrzeugreifen 40, eine Drehung in dem Antriebsmotor 5 bewirken kann. Diese Selbsthemmung bzw. Selbstblockade gewährleistet es, dass bei einer Stromlosschaltung des Antriebsmotors 5 ein Verdrehen der Antriebsrolle 9 unmöglich ist. Diese wirkt dann gegebenenfalls als Bremse gegen den Umfang des Fahrzeugreifens 40.

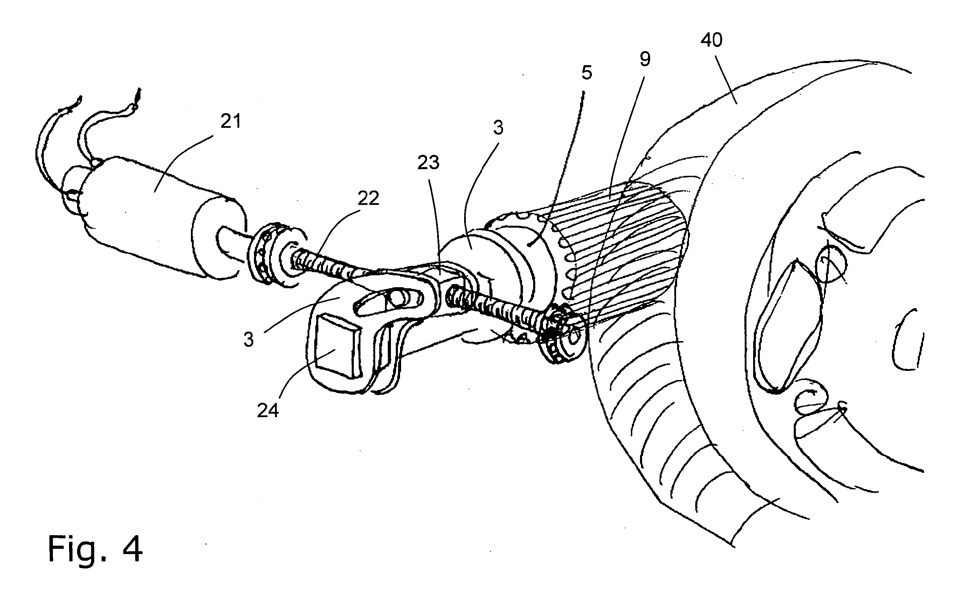

Fig. 4 zeigt eine Ausführungsform für einen als Bewegungseinrichtung dienenden Anschwenkmechanismus zum Bewegen des Trägers zwischen der Ruheposition, in der die Antriebsrolle 9 von dem Rad bzw. dem Fahrzeugreifen 40 des Anhängers getrennt ist, und der Antriebsposition, in der die Antriebsrolle 9 gegen den Fahrzeugreifen 40 des Anhängers gedrückt wird. In Fig. 4 ist der Träger 3 in Antriebsposition gezeigt.

Der Anschwenkmechanismus weist einen Mikroantrieb 21 und eine von dem Mikroantrieb drehend angetriebene Spindel 22 auf. Die Spindel 22 durchdringt eine Spindelmutter 23, die an dem Träger 3 gehalten ist.

Je nach der von dem Mikroantrieb 21 bewirkten Drehung der Spindel 22 wird die Spindelmutter 23 nach vorne bewegt und dadurch auch der Träger 3 um eine Achse 24 nach vorne verschwenkt, sodass die Antriebsrolle 9 gegen die Außenseite des Rads 40 gedrückt wird. Bei entgegengesetzter Drehrichtung des Mikroantriebs 21 und der Spindel 22 wird die Antriebsrolle 9 von dem Rad 40 abgehoben und der Träger 3 in seine Ruheposition bewegt.

Der Mikroantrieb 21 ist unabhängig von dem im Inneren der Antriebsrolle 9 vorgesehenen Antriebsmotor 5 und kann dementsprechend auch unabhängig von diesem angesteuert werden.

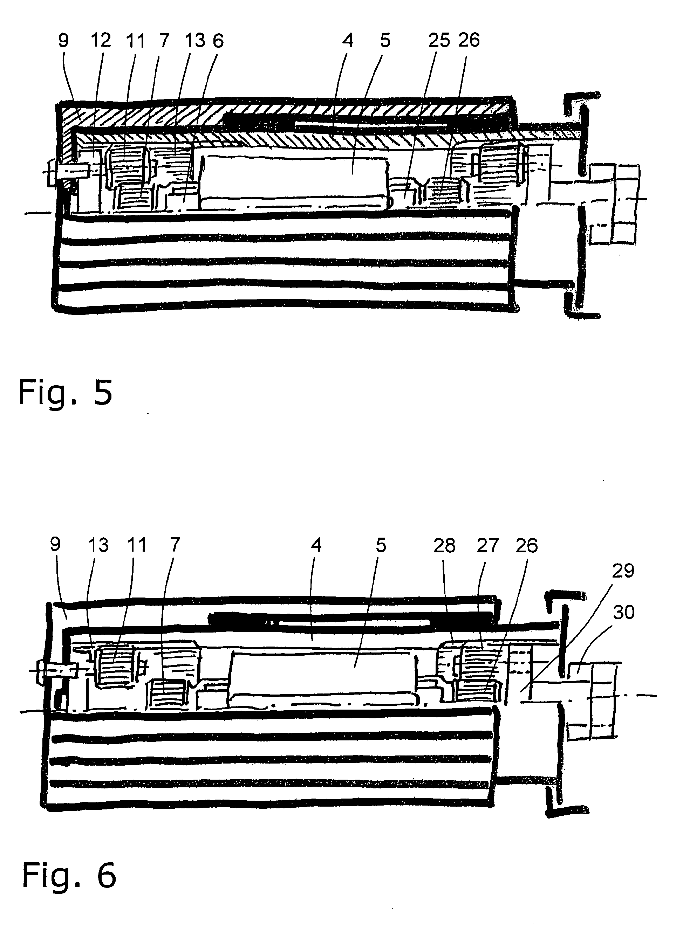

Die Fig. 5 bis 8 zeigen eine andere Ausführungsform, bei der der Antriebsmotor 5 nicht nur zum Drehen der Antriebsrolle 9, sondern auch zum Betreiben der Bewegungseinrichtung zum Bewegen des Trägers (Anschwenkmechanismus, Verschiebemechanismus) genutzt wird.

Fig. 5 zeigt den Antriebsmotor 5 und die Antriebswelle 6 mit dem dort vorgesehenen Antriebsritzel 7. Das Antriebsritzel 7 treibt ein einstufiges Planetengetriebe an. Dazu bildet das Antriebsritzel 7 das Sonnenrad, das die umlaufenden Planetenräder 11 bewegt und zu einem Abrollen innerhalb des Hohlrads 13 veranlasst. Der Planetenträger 12 der Planetenräder 11 ist mit der Stirnseite der Antriebsrolle 9 gekoppelt, wodurch die Bewegung auf die Antriebsrolle 9 übertragen wird.

Die Antriebswelle 6 des Antriebsmotors 5 weist zudem auf der gegenüberliegenden Seite ein zweites Wellenende 25 mit einem zweiten Antriebsritzel 26 auf. Das zweite Wellenende 25 und das zweite Antriebsritzel 26 sind in der in Fig. 5 gezeigten Darstellung noch funktionslos. Jedoch ist eine in den Figuren nicht gezeigte Verschiebeeinrichtung vorgesehen, mit der der Antriebsmotor 5 zwischen der in Fig. 5 gezeigten ersten Position für den ersten Betriebszustand und einer in Fig. 6 gezeigten zweiten Position für den zweiten Betriebszustand axial verschiebbar ist. Die Verschiebeeinrichtung kann zum Beispiel durch ein elektromagnetisches Stellglied gebildet werden.

Bei der in Fig. 6 gezeigten zweiten Position ist der Antriebsmotor 5 dementsprechend um einen bestimmten Weg axial (in der Figur nach rechts) verschoben. Dadurch gelangt das Antriebsritzel 7 außer Eingriff der Planetenräder 11, sodass auch bei einem Betrieb des Antriebsmotors 5 die Antriebsrolle 9 nicht mehr drehend angetrieben werden kann.

Stattdessen ist auf der gegenüberliegenden Seite das zweite Antriebsritzel 26 in Eingriff mit einem dort vorgesehenen Planetengetriebe, nämlich mit Planetenrädern 27, die des Weiteren in einem Hohlrad 28 umlaufen. Das Hohlrad 28 kann wie das Hohlrad 13 auf der Innenseite des Tragrohrs 4 ausgebildet sein.

Die Planetenräder 27 sind durch einen Planetenträger 29 gehalten, der mit einem Achsfortsatz 30 verbunden ist.

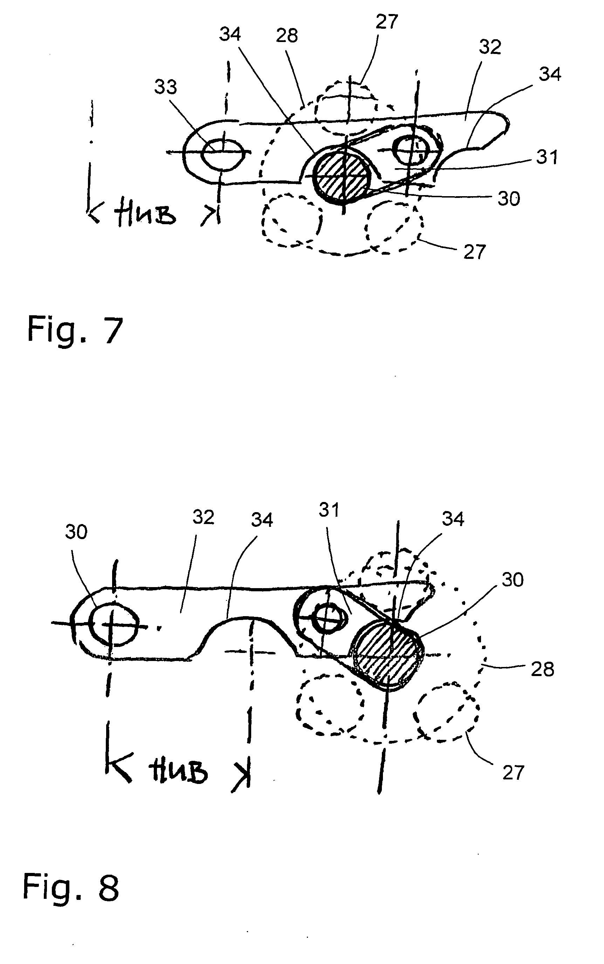

Die Wirkung des Anschwenkmechanismus wird anhand der Fig. 7 und 8 gezeigt, wobei Fig. 7 einen Zustand darstellt, in dem die Antriebsrolle 9 mit dem Träger 3 von dem Fahrzeugrad 40 abgeschwenkt ist (Ruheposition), während in Fig. 8 die Antriebsposition gezeigt ist.

An dem Achsfortsatz 30 ist ein Hebelelement 31 befestigt, das verschwenkbar mit einem Schubelement 32 verbunden ist. Das Schubelement 32 weist seinerseits eine Öse 33 auf, die mit der in den Fig. 7 und 8 nicht gezeigten Befestigungseinrichtung 1 koppelbar ist.

Wenn der Antriebsmotor 5 in der in Fig. 6 gezeigten zweiten Position aktiviert wird, bewirkt er eine Drehung des Planetenträgers 29 und damit des Achsfortsatzes 30, sodass das Hebelelement 31 zwischen den in den Fig. 7 und 8 gezeigten Stellungen bewegbar ist. Entsprechende Endanschläge gewährleisten, dass die Bewegung nur innerhalb der beiden in den Fig. 7 und 8 gezeigten Extremstellungen erfolgen kann, jedoch nicht darüber hinaus.

Wie erkennbar ist, befinden sich die Mittelachsen des Achsfortsatzes 30 und der Öse 33 in der in Fig. 7 gezeigten Stellung am nächsten zueinander, während sie in der in Fig. 8 gezeigten Position auseinander bewegt sind. Dadurch lässt sich der Anschwenkvorgang für den Träger realisieren.

In dem Schubelement 32 sind zwei Ausnehmungen 34 ausgebildet, von denen jeweils eine in einer der entsprechenden Extrem- bzw. Endstellungen über den Achsfortsatz gleitet, um die jeweilige Stellung zu sichern und zu fixieren. Selbstverständlich sind ohne weiteres noch weitere Bewegungs- oder Schwenkmechanismen denkbar, bei denen der Antriebsmotor 5 gleichzeitig auch als Bewegungs- bzw. Schwenkmotor genutzt werden kann.

## Patentansprüche

1. Rangierantrieb für einen Anhänger, mit
- einer Befestigungseinrichtung (1) zum Befestigen an dem Anhänger;
- einem relativ zu der Befestigungseinrichtung (1) bewegbaren Träger (3);
- einem von dem Träger (3) gehaltenen Antriebsmotor (5);
- einer von dem Antriebsmotor (5) drehend antreibbaren Antriebsrolle (9);
- einer im Kraftfluss zwischen dem Antriebsmotor (5) und der Antriebsrolle (9) vorgesehenen Getriebeeinrichtung (8);
- einer Bewegungseinrichtung zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird;
**dadurch gekennzeichnet, dass**
- die Antriebsrolle (9) wenigstens teilweise hohl ausgebildet ist, derart, dass innerhalb des von der Antriebsrolle (9) umschriebenen Raums eine Ausnehmung ausgebildet ist;
- dass sowohl die Getriebeeinrichtung (8) als auch der Antriebsmotor (5) wenigstens teilweise innerhalb der Ausnehmung angeordnet sind.

2. Rangierantrieb nach Anspruch 1, **dadurch gekennzeichnet, dass** die Getriebeeinrichtung (8) und/oder der Antriebsmotor (5) im Wesentlichen, insbesondere vollständig innerhalb der Ausnehmung angeordnet sind.

3. Rangierantrieb nach einem der vorstehenden Ansprüche, **dadurch gekennzeichnet, dass** die Antriebsrolle (9) an einer ihrer beiden Stirnseiten geschlossen ist.

4. Rangierantrieb nach einem der vorstehenden Ansprüche, **dadurch gekennzeichnet, dass** die Getriebeeinrichtung (8) und die Antriebsrolle (9) von dem Träger (3, 4) gelagert werden.

5. Rangierantrieb nach einem der vorstehenden Ansprüche, **dadurch gekennzeichnet, dass**
- ein die Getriebeeinrichtung und die Antriebsrolle lagernder Teil (4) des Trägers (3) eine im Wesentlichen zylindrische Grundform aufweist;
- die Antriebsrolle (9) diesen Teil (4) des Trägers (3) radial umgibt.

6. Rangierantrieb nach einem der vorstehenden Ansprüche, **dadurch gekennzeichnet, dass** der Antriebsmotor (5) ein bürstenloser Elektromotor mit Dreiphasen-Ansteuerung ist.

7. Rangierantrieb nach einem der vorstehenden Ansprüche, **dadurch gekennzeichnet, dass** die Getriebeeinrichtung (8) wenigstens eine der folgenden Komponenten aufweist:
- Planetengetriebe,
- Wolfromgetriebe,
- Gleitkeilgetriebe (Harmonic-Drive-Getriebe)
- Cyclogetriebe,
- zwei Getriebestufen.

8. Rangierantrieb nach einem der vorstehenden Ansprüche, **dadurch gekennzeichnet, dass**
- die Getriebeeinrichtung (8) ein Planetengetriebe aufweist;
- auf einer Antriebswelle (6) des Antriebsmotors (5) ein Antriebsritzel (7) angeordnet ist, dass als Sonnenrad des Planetengetriebes dient;
- die Antriebsrolle (9) mit einem Planetenträger (12) des Planetengetriebes starr verbunden ist;
- ein Hohlrad (13) des Planetengetriebes an dem Träger (3) befestigt ist.

9. Rangierantrieb nach einem der Ansprüche 1 bis 7, **dadurch gekennzeichnet, dass**
- die Getriebeeinrichtung zwei in Serie angeordnete Planetengetriebe aufweist;
- auf einer Antriebswelle (6) des Antriebsmotors (5) ein Antriebsritzel (7) angeordnet ist, das als Sonnenrad des ersten Planetengetriebes dient;
- das Sonnenrad (14) des zweiten Planetengetriebes an dem Planetenträger (12) des ersten Planetengetriebes ausgebildet ist;
- die Antriebsrolle (9) mit einem Planetenträger (16) des zweiten Planetengetriebes starr verbunden ist;
- die Hohlräder (13) von beiden Planetengetrieben an dem Träger (4) befestigt sind.

10. Rangierantrieb nach einem der vorstehenden Ansprüche, **dadurch gekennzeichnet, dass** die Bewegungseinrichtung durch den Antriebsmotor (5) antreibbar ist, um die Bewegung des Trägers (3) zwischen der Ruheposition und der Antriebsposition durchzuführen.

11. Rangierantrieb nach einem der vorstehenden Ansprüche, **dadurch gekennzeichnet, dass** die Bewegungseinrichtung ein Untersetzungsgetriebe (26, 27, 28, 29) aufweist.

12. Rangierantrieb nach einem der vorstehenden Ansprüche, **dadurch gekennzeichnet, dass** die Bewegungseinrichtung eine Kraftwirkungseinrichtung (30-32) aufweist, zum Erzeugen einer Kraftwirkung zwischen dem Träger (3) und der Befestigungseinrichtung (1), derart, dass der Träger (3) relativ zu der Befestigungseinrichtung (1) bewegbar ist.

13. Rangierantrieb nach einem der vorstehenden Ansprüche, **dadurch gekennzeichnet, dass** eine Umschalteinrichtung vorgesehen ist, zum Umschalten zwischen einem ersten Betriebszustand, in dem der Antriebsmotor (5) ausschließlich zum Antreiben der Antriebsrolle (9) nutzbar ist, und einem zweiten Betriebszustand, in dem der Antriebsmotor (5) ausschließlich zum Antreiben der Bewegungseinrichtung nutzbar ist.

14. Rangierantrieb nach einem der vorstehenden Ansprüche, **dadurch gekennzeichnet, dass**
- die Umschalteinrichtung eine Verschiebeeinrichtung aufweist;
- der Antriebsmotor (5) durch die Verschiebeeinrichtung zwischen einer ersten Position für den ersten Betriebszustand und einer zweiten Position für den zweiten Betriebszustand axial verschiebbar ist.
